(19) Europäisches Patentamt
European Patent Office
Office européen des brevets

(11) EP 1 152 042 A1

(12) EUROPEAN PATENT APPLICATION

(43) Date of publication:
07.11.2001 Bulletin 2001/45

(51) Int Cl.^7^: C09D 7/00

(21) Application number: 01304036.5

(22) Date of filing: 03.05.2001

(84) Designated Contracting States:
AT BE CH CY DE DK ES FI FR GB GR IE IT LI LU MC NL PT SE TR
Designated Extension States:
AL LT LV MK RO SI

(30) Priority: 04.05.2000 GB 0010809

(71) Applicant: The Associated Octel Company Limited
Manchester M90 4AA (GB)

(72) Inventors:
- Basset, Derek
Cheshire CH2 1HW (GB)
- Thompson, Russell
c/o The Associated Octel Co.Ltd.
Manchester M90 4AA (GB)
- Sippel, Roy
Woodstown New Jersey 08098 (US)

(74) Representative: Harding, Charles Thomas
D. Young & Co.
21 New Fetter Lane
London EC4A 1DA (GB)

# (54) Thickener and Binder

(57) There is provided a binder and/or thickener system comprising alumina.

Figure 1. Comparison of Brookfield Viscosity of Colloidal Alumina-Water Mixtures at pH 3.5 versus Natrosol-Water Mixture at pH 9

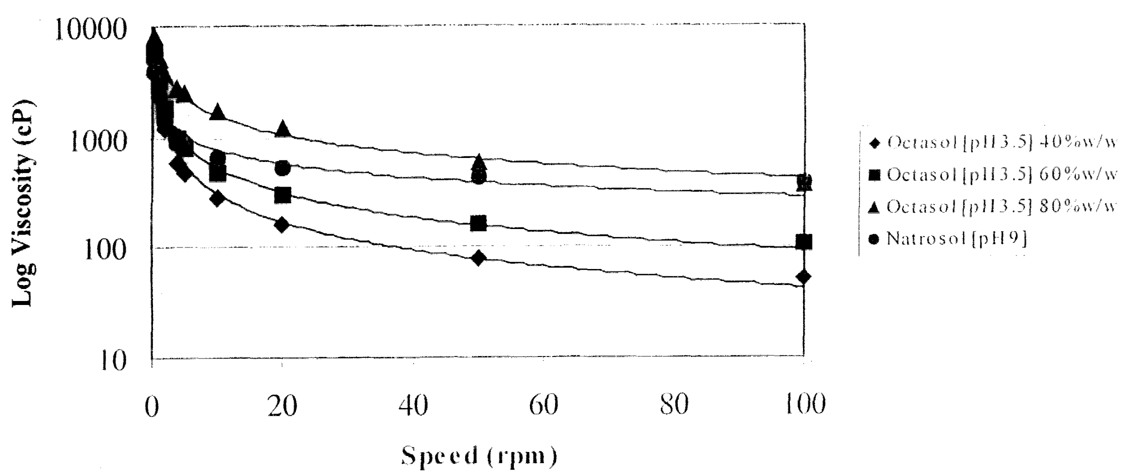


EP 1 152 042 A1

## Description

The present invention relates to a compound for use as a thickener and/or binder.

## BACKGROUND OF THE INVENTION

### Field of the invention

The subject invention relates to compositions that are useful in thickening and rheology control of water-borne coating formulations

Specifically, the subject invention relates to fibrous colloidal cationic alumina dispersions with thickening and structuring properties.

Said compositions are useful in thickening and controlling flow properties of water-borne coating formulations

### Description of the Prior and Related Art

The world-wide coatings market is presently undergoing great change. World-wide government regulations are the driving force for a rapidly changing technology. Demands are being made for improved coating performance that complies with environmental regulations, at a reduced cost. Increasing concern about toxic hazards has led to the need to change many more materials that were traditionally used in coatings. The coatings industry is under intense pressure. The list of chemicals deemed as toxic and aimed at being controlled is growing. Replacing some of these ingredients to obtain a coating with adequate properties is not always possible. New technologies are required.

Traditionally, coatings have changed relatively slowly in an evolutionary response to new performance requirements, new raw materials, and competitive pressures. An important reason for the relatively slow rate of change is the difficulty of predicting product performance on the basis of laboratory tests. It is much less risky to make relatively small changes in composition and check actual field performance before making any further changes.

In the past. the primary concerns were to produce and successfully apply coating systems that could protect the substrate for extended periods of time. Formulas consisted of the same basic ingredients as used today; but there was no concern as to ingredient toxicity, whether solvents were photochemically reactive, etc.

However, with progress came the regulatory issues of volatile organic compounds (VOCs) and the Clean Air Act, which regulates photochemically active substances. The regulations with few exceptions are far-reaching and the regulators aggressive. Coatings have been second to cars as a source of VOCs. A major driving force for change has been the need to reduce VOC emissions from coatings because of their effect on air pollution. The drive to reduce VOC emissions has also been fuelled by the rapidly rising cost of organic solvents. Increasing concern about toxic hazards has led to the need to change many more materials that were traditionally used in coatings. Product performance requirements have tended to increase also; e.g., increased effectiveness of corrosion protection by coatings is demanded.

One way of compliance with the regulations is the use of waterbome coating systems. However, the technology has not yet truly progressed to the degree that the performance equals that of solvent-based systems. Improvement of waterborne coatings technology presents market opportunities for new ingredients and finished latex products. The financial incentives for doing this work are great.

The introduction of latex paints was the first major step away from solvent-borne coatings. Broader use of water-borne coatings has been the major trend in coatings since the 1970s.

Water-borne coatings have been widely used recently in industrial coatings. This has also helped make it possible to control pollution, to reduce risk of fire, and to improve aspects of occupational health and safety. Both water-soluble and water-dispersible resins are used for water-borne coatings.

There are several advantages to using water-borne coatings:

a) Reduced volume of organic solvent emission from the manufacturing plant, thus decreasing adverse effects on the environment.
b) Reduced levels of VOCs in the working environment, thus improving aspects of occupational health and safety.
c) Reduced risk of fire.
d) Reduced usage of expensive organic solvents, thus saving resources.
e) Energy may be saved since there is no necessity to install incineration facilities.

For these reasons. great efforts have been made to develop water-borne coatings in a variety of industries. Today water-borne household and repair paints are commonly used. In the motor industry, it has become common to use a water-borne primer, usually applied by electro-coating. However, the major limitation for industrial application has been the flow properties of latex-based coatings.

Rheology is the science of flow and deformation of materials. Rheological properties critically affect the application and performance of coatings. In the application of coatings, flow of liquids controls the formation and appearance of a film. A major factor affecting the performance of applied coatings films is their resistance to mechanical failure during deformation.

Latex coating rheology and film properties are governed by the disperse phases, latex and pigment, and the matrix of interactions between the disperse phases and coating additives. A fundamental problem with aqueous polymer dispersions is that their rheology is less favourable for surface coating applications than that of polymer solutions which are more Newtonian. Levelling requirements for many industrial coatings are more rigorous than for architectural coatings. Demands on the application and flow properties of coatings have increased substantially. A problem with latex coatings is that they tend to be excessively shear thinning. When the viscosity at high shear rate is set appropriately, the viscosity at the low shear rates encountered in levelling tends to be high. This is one of several reasons that levelling of latex-based coatings tends to be poorer than solvent-borne coatings.

The need to modify the viscoelastic properties of liquid coating is universal with respect to two major considerations: bulk properties and application and film properties of coatings. Bulk properties can be broadly considered as anti-sedimentation and in-can appearance. Application and film properties cover ease of application, flow, levelling and sag resistance.

Thickeners are components that substantially increase viscosity (resistance to flow) at relatively low concentrations. Rheology modifiers are additives that influence viscosity at high and/or low shear rates, but contribute little to consistency. Thickeners and rheology modifiers play an essential role in the performance of a coating and they are amongst the most important components in a coating system. Modern aqueous coatings usually contain at least one, often two and sometimes several thickeners in order to obtain the desired flow properties. For coatings, thickeners are normally used to increase the viscosity of the external phase of the paint during production and application, and to control viscosity of the final paint. They increase viscosity at moderate shear rates. approximately those encountered during pouring, stirring or mixing. Viscosity of the paint as a function of shear rate particularly affects ease of brushing, film thickness applied, levelling, sagging and settling. The viscosity of the external phase controls the rate of penetration of that phase into a porous substrate such as wood. If penetration is rapid, the viscosity of the paint above the porous surface increases rapidly resulting in poorer levelling. Frequently, a single thickener or combination of thickeners is effective in meeting all of the rheological requirements (low, medium and high shear) of a given coating.

Associative thickeners are a modern version of water-soluble polymers and these polymers exhibit network effects where hydrophobic domains in the polymers associate. giving rise to a thickening property without at the same time adversely affecting flow and levelling of paint. Associative thickeners minimise latex particle flocculation relative to conventional water-soluble polymeric thickeners such as hydroxyethyl cellulose.

However, they are relatively expensive specialty chemicals and contribute a major proportion towards the costs of a modern coating formulation containing them.

Coating manufacturing operations generally consist of several stages of processing, and thickeners and rheology modifiers are important at each stage. Some common stages are the 'pre-mix' stage (ingredients added prior to pigment), 'grind' or 'millbase' (pigment added and reduced in size for optimum dispersion) and 'letdown' (where the polymer or latex is normally added). Some but usually not all of the thickener is added to the premix to increase viscosity in the grind for improved pigment dispersion (deagglomeration). The remaining thickener is usually added to the letdown to provide proper suspension and product consistency. Finally, post-adjustments with additional thickener may be required to bring the product into specification for application and appearance properties.

Titanium dioxide is the most important white pigment currently used in the coatings industry. It has excellent hiding power and whiteness. In a coating, the levels of dispersion and dispersion stability achieved with $TiO_2$ pigments are critical factors that will influence overall coatings performance. However, the high cost of $TiO_2$ is a significant drawback. It is almost always used in conjunction with cheaper extender pigments in less demanding applications in order to reduce the raw material cost of a coating formulation and, in some cases, improve coating performance. These products typically have high PVC and tolerate $TiO_2$ extenders.

Consequently, there is a need for new and improved thickeners for water-based coatings that are cost-effective in use. It would also be desirable to have a multi-functional thickening additive, which can be used to control rheology and also behave as an extender pigment, thereby creating added value.

**Present Invention**

Some aspects of the present invnetion are defined in the appended claims.

The present invention aims to provide a method for thickening and rheology control of water-borne coatings formulations.

The present invention aims to provide a cost-effective means of providing rheology control.

The present invention aims to provide a multi-functional thickening additive that can be used to control rheology and behave as an extender pigment.

## SUMMARY OF THE INVENTION

The aims of the present invention are provided by use of fibrous colloidal cationic alumina dispersions with thickening and structuring properties that are useful in thickening and rheology control of water-borne coating formulations.

The commercially available colloidal alumina, tradename: Octasol™. is a colloidal dispersion of minute fibrils of boehmite (AlOOH) alumina. The surface of the fibrils is modified by adsorbed acetate ions which play an important role in the colloidal behaviour and the useful properties of the product. The combination of high surface area, high positive charge, and the film-forming properties combine to make Octasol™ an effective inorganic binder or paint component. Furthermore, it may be used as a component of organic coatings for thickening and reinforcing effects.

Because of the fibrous nature of the particles and their tendency to associate with each other in water, a network of particles tends to be formed throughout aqueous systems. When sheared by moderate stirring, this network breaks down and when the stirring stops, the network structure reforms, thus giving thixotropy.

The properties of the colloidal cationic alumina relevant to use in coatings are the thixotropy, surface modification properties, binding and coagulation properties, and thickening properties.

The thixotropy of the product is key to use as a rheology control additive in coatings.

This would most likely be as a co-additive for existing water-soluble polymers already used in paints in order to modify their rheological properties. The cost of water-soluble thickening polymers used for formulating waterborne paints is typically large and the advantages of using colloidal cationic alumina would be in a major cost saving.

## DETAILED DESCRIPTION OF SPECIFIC EMBODIMENTS

The present invention is directed to a composition suitable for the thickening and rheology control of waterborne coating formulations

Octasol™ colloidal alumina is unique in that it is a positively charged inorganic thickening and suspending agent for aqueous systems. Because of the fibrous nature of the particles and their tendency to associate with each other in water. a network of particles tends to be formed throughout aqueous solutions. When stirred, this network breaks up, and when stirring stops, it again forms, thus giving thixotropy. Octasol™ is available in a wide viscosity range; from very fluid to extremely viscous thixotropic sols. Use is suggested in pigment suspension; thickening and suspending in aqueous paints: viscosity control in adhesives, coatings, sizing and impregnating agents; thickening of salt solutions, and modification of various emulsions, waxes, cleaning compounds and other proprietary formulations.

The rheological behaviour of this colloidal cationic alumina is a function of the concentration, pH and polyvalent anion concentration. The wide range of viscosity and thixotropy effects achievable with this product offers possibilities in thickening and suspending applications where the inorganic character and the positive charge provide properties not attainable with other systems.

In a preferred embodiment of this invention, the colloidal cationic alumina thickener and suspender of this invention may either be used alone or in combination with one or more thickening and suspending agents in a water-based coatings formulation. Preferably, the subject of this invention is used in combination with one or more thickening/suspending agents.

In this way, the colloidal cationic thickener may either be used as a total replacement for thickeners or as a partial replacement. Use as a partial replacement is preferred. Colloidal alumina should also be of interest as a reinforcing agent for organic polymers that are water-soluble or water-dispersible. This includes starches, dextrins, water-soluble gums. polyethylene oxides and cellulose ethers and esters, polyvinyl pyrrolidones, polyvinyl ethers, polyvinyl ketones, polyvinyl alcohols, and water-soluble proteins such as glues.

It is suggested that-the fibrous colloidal alumina might have minor associative thickening properties for use in waterborne paints.

Another problem with waterborne coatings is 'blocking' or stickiness of the final coating. This is to do with hardness of the resultant polymer layer and this property is typically measured by scrub resistance and stain tests. It is expected that the use of this colloidal cationic alumina might offer some reinforcing or cross-linking property to the coating.

Effective pigment dispersion is particularly a problem in waterborne systems. There is some promise for use of the colloidal cationic alumina as a combined $TiO_2$ pigment dispersion aid and rheology improver. Here the opacity of the colloidal cationic alumina would be key, with typical paint binders having a refractive index of 1.5 units.

Most inorganic thickeners and rheology modifiers are supplied as powders. When they are properly dispersed into a coating, they usually function as suspending or gelling agents and some may have secondary utility as extender pigments. The subject of the present invention is a sol; therefore, no pre-dispersion in water is required before use as a thickening additive.

The subject of the present invention may be used as a thickening and structuring agent with the broad range of emulsion polymers (latexes) which are widely utilised as binders for aqueous coatings including latexes prepared by free radically polymerising such monomers as (meth)acrylates, vinyl and vinylidene halides, styrene, vinyl esters, acrylonitrile, ethylene, and mixtures known in the art, giving for example, water-borne acrylics, water-reducible alkyds, water-reducible polyesters, water-borne epoxy resins, water-borne urethanes. styrene/acrylic, styrene/butadiene. Other formulations, which may also be thickened with the subject of the present invention, include aqueous dispersions of pre-formed step growth polymers, for example polyurethanes. polyester (including. Alkyd resins) and epoxy resins. Hybrid systems such as polyurethanes -acrylic resins and epoxy-acrylic resins may also be thickened with the colloidal cationic alumina of the present invention.

## Usefulness (Utility) of the Invention

We have found the product of the present invention to have useful multifunctional properties that allow its use as an economical extender with rheology control properties. The product may be used as a thickening and structuring agent.

The following preparations and examples are included herein as further description and are illustrative of the present invention.

## EXAMPLES

### *Example 1 - Effect of Simple Addition of Colloidal Cationic Alumina on the Stability of a Vinyl Latex*

A colloidal cationic alumina dispersion (tradename Octasol™ marketed by The Associated Octel Company Limited) containing 3% $Al_2O_3$ was prepared according to the methods exemplified in PCT/GB/97/01168. Initially, the evaluation began by assessing the effect on the stability of the vinyl latex, Emultex VV573 (vinyl acetate/VeoVA 10 latex supplied by the Harlow Chemical Co, Templefields, Harlow, Essex, UK) by simple mixing. This is a thermoplastic latex, with no added cross-linker.

It was observed that upon addition of small volumes of colloidal cationic alumina to the latex, a few small lumps appeared in the mixture. To ensure that these lumps were not due to incomplete mixing of the alumina with the latex, a high-speed mixer was employed.

A mixture of the colloidal alumina and latex was then made at the thickener: latex ratio that would normally be used in a typical water-based paint system. As the latex was added to the colloidal alumina, an immediate increase in viscosity was observed. However, the mixture appeared stable and a uniform coating was obtained when the film was cast. Comparison of coatings containing the latex formulated with a typical cellulosic thickener, Natrosol, and the colloidal cationic alumina showed that the coating containing the colloidal alumina produced a film that was matt in appearance.

It was thus determined experimentally that addition of the colloidal cationic alumina had no significant effect on the stability of the latex. Emultex VV573.

### *Example 2 - Water-based Matt Finish Paint Formulation*

A matt paint system was used for the subsequent investigations based on the formulation given in Table 1 containing the latex, Emultex VV573.

The paint was made using the following procedure:

a) Preparation and dispersion of the millbase components using a Santrotrac 50 high-speed mixer. Dispersion was completed at approximately 2500 rpm.

b) Addition of the other components using low shear mixing.

The mixing times for the paints were altered to take into account variation in batch volume.

Table 1.

| Water-based Matt Finish Paint Formulation | | |
|---|---|---|
| Component* | %w/w | Function |
| *Millbase* | | |
| Water | 17.7 | |
| Tetron | 1.9 | sequestering agent |
| Orotan 850E | 0.5 | dispersing agent |
| Ammonia | 0.1 | pH adjuster |
| Mergal K6N | 0.2 | biocide |
| Foamstopper 101 | 0.1 | antifoam |
| Natrosol | 21.6 | cellulosic thickener |
| Tioxide TR50[1] | 10.9 | titanium dioxide |
| Snowcal 70 | 24.1 | extender |
| Speswhite clay | 5.7 | extender |
| Texanol | 1.1 | cosolvent |
| *Letdown* | | |
| Latex | 10.1 | film former |
| Foamstopper 101 | 0.1 | antifoam |
| Water | 5.9 | |
| | **100** | |
| Total Solids | 47% | |
| PVC approx. | 70%[2] | |

** Suppliers: 0.91 ammonia, Aldrich Chemical Co Ltd. Foamstopper 101. Harlow Chemical Co: Mergal K6N. Hoechst Latex. Harlow Chemical Co: Tioxide TR50. Tioxide Europe Ltd: Snowcal 70, Croxton and Garry Ltd. Speswhite Clay. ECC Imernational Ltd: Tetron. Albright % Wilson, Orotan 850. Rohm & Hass (UK) Ltd. Natrosol 250MR. Hercules Ltd: Texanol. Honeywell & Stem Ltd.*

*1 In later work, pigment Tioxide TR92 was used as a direct replacement for pigment Tioxide TR50.*

*2 The colloidal alumina has not been regarded as pigment for the purpose of calculating PVC. If the colloidal alumina is included as 'pigment' then PVC becomes 72%.*

For any changes made to the formulation, the total solids and pigment volume concentration were kept the same by varying the amount of latex and water in the formulation.

***Example 3 - Formulation of Colloidal Alumina into Water-Based Matt Finish Paint***

When the thickener, Natrosol, was directly replaced with the colloidal cationic alumina on a weight-for-weight basis, the mixture with the latex resulted in a considerable increase in viscosity. Therefore, the concentration of colloidal alumina was reduced slightly. In the paint formulation, Natrosol was completely replaced by ¾ of the amount of colloidal alumina based on weight of a 3 % $Al_2O_3$ dispersion.

The matt paint formulation used in the optimisation work is that given in Table 1, replacing Natrosol thickener with colloidal cationic alumina.

When a film of this matt paint was cast, the coating exhibited a glossy sheen that indicates good pigment dispersion. This dried to give a uniform coating with a matt appearance.

After standing for a length of time, the paint developed a small volume of clear liquid on the surface of the paint. This phenomenon occasionally occurs in commercial paints. Analysis showed the liquid to contain 98.8% water.

***Example 3 - Optimisation of Colloidal Alumina into Water-Based Matt Finish Paint:***

***Part 1. Viscosity Measurements***

The substitution of the colloidal cationic alumina for the cellulosic thickener. Natrosol. in a matt paint proved successful, although slight alterations needed to be made to improve the paint.

Paints made with the colloidal cationic alumina are acidic, and increase significantly in viscosity when neutralised. The paint was similar in consistency to commercial non-drip emulsion paint, but due to the high viscosity, problems arose when trying to cast a film. The correct level of colloidal cationic alumina required to give acceptable viscosity needed to be determined.

The effect of colloidal cationic alumina concentration was first evaluated by measuring the viscosity of various mixtures of water and colloidal cationic alumina at different shear rates using a Brookfield viscometer. The additions of colloidal cationic alumina considered were 40, 60 and 80% replacement on a weight basis. To determine the addition of colloidal cationic alumina which gave the required viscosity, comparison was made to a solution of Natrosol at the concentration found in the millbase of the standard water-based matt formulation. The Brookfield viscosity data for the colloidal cationic alumina at pH 3.5 and pH 9 versus Natrosol at pH 9 is given in Table 2 and is illustrated graphically in Figures 1 and 2 respectively.

Table 2.

| Brookfield Viscosity Measurement of Colloidal Cationic Alumina and Natrosol Water Mixes | | | | | | | |
|---|---|---|---|---|---|---|---|
| **Speed (rpm)** | **Viscosity (Centipoise)** | | | | | | |
| | **Octasol™ \|pH 3.5\|** | | | **Octasol™ \|pH 9\|** | | | **Natrosol* \|pH 9\|** |
| | **40% w/w** | **60% w/w** | **80% w/w** | **40% w/w** | **60% w/w** | **80% w/w** | |
| 0.5 | 4800 | 5600 | 8000 | 4000 | 4800 | 9600 | 4000 |
| 1 | 2400 | 3200 | 5200 | 2400 | 2800 | 4800 | 2400 |
| 2 | 1200 | 1800 | 3800 | 1000 | 1600 | 3200 | 1400 |
| 4 | 600 | 1000 | 2700 | 700 | 1000 | 1500 | 900 |
| 5 | 480 | 800 | 2480 | 650 | 880 | 1200 | 800 |
| 10 | 280 | 480 | 1760 | 1000 | 1640 | 840 | 640 |
| 20 | 160 | 300 | 1180 | 940 | 1440 | 1600 | 540 |
| 50 | 80 | 160 | 600 | 464 | 648 | 768 | 440 |
| 100 | 52 | 108 | 372 | 272 | 364 | 412 | 380 |

* at mill base concentration

The mixture containing 40% w/w colloidal cationic alumina that had been adjusted to pH 9. exhibited a similar Brookfield viscosity at low shear (i.e., at 0.5 rpm to the Natrosol solution). It is important to evaluate the effects of low and high shear (0.5 and 100 rpm respectively), in the paint. Low shear viscosity represents the viscosity of the paint in the can and usually determines resistance to pigment settling. While high shear viscosity gives an indication of the paint's behaviour during the pigment dispersion stage in the paint-making process. If the viscosity at high shear is too low, then the paint tends to splatter onto the side of the mixing vessel resulting in poor pigment dispersion. The high and low shear viscosity of the resulting paint is important for application and formation of level, sag-free paint films.

Visually, the viscosity of the colloidal cationic alumina changes as the pH becomes more basic, but maximum viscosity at pH 7 was observed.

Paints were made with two different samples of colloidal cationic alumina at this stage, at 40% of the normal concentration of Natrosol. The paints were assessed visually and also in terms of their viscosity. The second sample of colloidal cationic alumina showed lower viscosity and was also incorporated at 60% of the normal Natrosol concentration for comparison purposes. The viscosity measurements for the paints containing the colloidal cationic alumina are given in Table 3 and in Figure 3.

Table 3.

| Brookfield Viscosity Measurement for Water-Based Matt Emulsion Paint containing Colloidal Cationic Alumina | | | | |
|---|---|---|---|---|
| **Speed (rpm)** | **Viscosity (Centipoise)** | | | |
| | **Natrosol** | **Octasol™ I** | **Octasol™ II** | **Octasol II™** |
| | | **(40%)** | **(40%)** | **(60%)** |
| 0.5 | 36000 | 38400 | 28800 | 47200 |
| 1 | 28400 | 24400 | 17600 | 29200 |
| 2 | 19000 | 16400 | 11800 | 19600 |
| 4 | 12000 | 10900 | 7900 | 12000 |

Table 3. (continued)

| Brookfield Viscosity Measurement for Water-Based Matt Emulsion Paint containing Colloidal Cationic Alumina | | | | |
|---|---|---|---|---|
| **Speed (rpm)** | **Viscosity (Centipoise)** | | | |
| | **Natrosol** | **Octasol™ I** | **Octasol™ II** | **Octasol II™** |
| | | **(40%)** | **(40%)** | **(60%)** |
| 5 | 10160 | 9360 | 5920 | 9200 |
| 10 | 6560 | 4920 | 3520 | 5360 |
| 20 | 4218 | 2900 | 1920 | 330 |
| 50 | 2400 | 1368 | 808 | 1304 |
| 100 | 1612 | 794 | 444 | 756 |

***Example 4 - Optimisation of Colloidal Alumina into Water-Based Matt Finish Paint:***

***Part 2. Order of Component Addition***

Three paints were made using the formulation given in Example 2, but using Tioxide TR92 as pigment. The colloidal cationic alumina was incorporated into the paint formulation as a complete replacement for Natrosol.

The order in which the components were added to the mixture was varied:

Paint 1. Order of Addition: Dispersant, Colloidal Cationic Alumina and Pigment Mixture

a) Dispersant and other millbase ingredients (excluding the colloidal cationic alumina) were mixed together.
b) Under low shear, a slurry of pigments and colloidal cationic alumina (which had previously been mixed at low shear for 5 minutes) was added to the millbase and dispersion affected at 2000 rpm. To give a workable slurry, half of the water from the millbase was also included here.
c) Addition of other components using low shear mixing.

Paint 2. Order of Addition: Dispersant, Pigment, Colloidal Cationic Alumina

a) Dispersant and other millbase ingredients (excluding the colloidal cationic alumina) were mixed together.
b) Under low shear, the pigment and extenders were added to the millbase.
c) Colloidal cationic alumina was then added and dispersion affected at 2000 rpm.
d) Addition of other components using low shear mixing.

Paint 3. Order of addition: Dispersant, Colloidal Cationic Alumina, Pigment

a) Dispersant and other millbase ingredients (excluding the colloidal cationic alumina) were mixed together.
b) Under low shear the colloidal cationic alumina was added to the millbase.
c) The pigment and extenders were then added and dispersion affected at 2000 rpm.
d) Addition of other components using low shear mixing.

The Brookfield viscosity results for the order of addition paints at pH 7 and pH 9 is given in Table 4 and in Figures 4 and 5.

Table 4.

| Brookfield Viscosity Measurement for 'Order of Addition' Paints | | | | | | |
|---|---|---|---|---|---|---|
| **Speed (rpm)** | **Viscosity (Centipoise)** | | | | | |
| | **Paint 1 (pH 7)** | **Paint 1 (pH 9)** | **Paint 2 (pH 7)** | **Paint 2 (pH 9)** | **Paint 3 (pH 7)** | **Paint 3 (pH 9)** |
| 0.5 | 63200 | 63200 | 80800 | 36000 | 36000 | 29600 |

Table 4. (continued)

| Brookfield Viscosity Measurement for 'Order of Addition' Paints | | | | | | |
|---|---|---|---|---|---|---|
| Speed (rpm) | Viscosity (Centipoise) | | | | | |
| | Paint 1 (pH 7) | Paint 1 (pH 9) | Paint 2 (pH 7) | Paint 2 (pH 9) | Paint 3 (pH 7) | Paint 3 (pH 9) |
| 1 | 31600 | 33600 | 38800 | 22800 | 22800 | 20400 |
| 2 | 19000 | 19000 | 23400 | 15400 | 16000 | 15400 |
| 4 | 12400 | 13700 | 14000 | 10600 | 11900 | 10100 |
| 5 | 10960 | 12160 | 12800 | 8640 | 10080 | 8480 |
| 10 | 7200 | 7920 | 8200 | 4640 | 5700 | 4800 |
| 20 | 3620 | 4640 | 4500 | 2720 | 3220 | 2640 |
| 50 | 1480 | 2240 | 1720 | 1368 | 1512 | 1152 |
| 100 | 816 | 1212 | 932 | 768 | 840 | 688 |

Films cast from the paints were all similar in appearance. The viscosity measurements seemed to suggest that mixing the pigment with the colloidal cationic alumina prior to dispersion would give the better end results, and so, this method was adopted for larger scale trials. However, when the paint was made on a larger scale, a considerable decrease in viscosity was observed, leading to pigment dispersion problems. A larger batch of Paint 3 gave a reasonable viscosity and pigment dispersion, and so the order of addition of the millbase in the following performance tests was dispersant, followed by colloidal cationic alumina and remaining millbase components, followed by addition of titanium dioxide and the extender pigments at low shear, approximately 600 rpm.

***Example 5 - Performance Testing of Paint containing Colloidal Cationic Alumina***

Films for the tests were cast as soon as possible after dispersion. Before any tests were conducted on the wet paint, any separated liquid was re-incorporated into the paint by mixing on a MSO CAA 11Y bench top mixer from Chemie Color AG, at approximately 200 rpm for 5 minutes.

***pH stability***

All the paints had their pH adjusted to approximately pH 9 with ammonia or AMP95 (2-amino-2-methyl-1-propanol); they were then checked at regular intervals using a Ross Sure Flow electrode that was calibrated with pH 7 and pH 9.2 buffers. The pH stability results are given in Table 5.

Table 5.

| pH Stability of Paint Systems | | | |
|---|---|---|---|
| Time (days) | Natrosol and Ammonia | Octasol™ and Ammonia | Octasol™ and AMP95 |
| 1 | 8.8 | 8.8 | 9.1 |
| 6 | 8.7 | 8.4 | 9.1 |
| 9 | 8.7 | 8.4 | 9.2 |
| 13 | 8.5 | 8.3 | 9.1 |
| 19 | 8.5 | 8.3 | 9.0 |

The results show that the pH of the paints do not change appreciably over the time interval evaluated. The two paints neutralised with ammonia showed the greatest change in pH since most of the ammonia evaporated, whereasAMP95 being much less volatile remained *in situ*.

***Cation Stability***

A 5% (0.452 M) solution of calcium chloride was titrated, 1 ml at a time, with a 5 g sample of paint. The paints were visually assessed for flocculation. The results are given in Table 6.

Table 6.

| Stability of Paint with Added Ions | |
|---|---|
| Paint | Amount of $CaCl_2$ solution added (ml) |
| Natrosol | > 25 |
| Octasol™ and Ammonia | > 25 |
| Octasol™ and AMP95 | < 1 |

The control experiment and the ammonia-neutralised paint containing colloidal cationic alumina both show cation stability. However, the paint containing AMP95 as neutralising agent is not cation stable, as it coagulates with less than 1 ml of calcium chloride solution.

***Mechanical Stability***

An ICI cone and plate viscometer was heated to 50°C and the viscosity of the paint was recorded after 10 minutes of shear. The sample was then inspected for coagulation. Results are given in Table 7.

Table 7.

| Mechanical Stability of Paint | |
|---|---|
| Paint | Poise |
| Natrosol | 3.5 |
| Octasol™ and Ammonia | 0 |
| Octasol™ and AMP95 | 0 |

The paints did not coagulate at high shear. The viscosity difference between Natrosol and the two paints containing colloidal cationic alumina is expected because of the different thickening modes operating.

***Scrub Resistance***

The film thickness was controlled by laying strips of masking and packing tape along the edges of the Leneta strip. A doctor blade was used to draw the paint down to give a wet film thickness of 180 μm. The test was then carried out according to ASTM D2486-95. The results are given in Table 8.

Table 8.

| Scrub Resistance | | | |
|---|---|---|---|
| Paint | Number of Cycles until Failure of Paint | | |
| | Natrosol | Octasol™ and Ammonia | Octasol™ and AMP95 |
| Trial 1 | 68 | 155 | 98 |
| Trial 2 | 48 | 244* | 116 |
| Trial 3 | 61 | 117 | 126 |
| Average | 59 | 136 | 113 |

* The accepted experimental error in the standard method ASTM D2486-95 is 25% of the mean for each result, therefore this result is discarded.

The scrub resistance for the paints containing colloidal cationic alumina is similar and shows a marked improvement over the Natrosol-containing paint.

***Whiteness***

The paint films were cast onto glass substrates using the same method of application as that described for scrub resistance. The paint films were left to dry for seven days before carrying out the test ASTM E313-73. The results are given in Table 9.

Table 9.

| Averaged Results from Spectrogard Spectrophotometer | | | |
|---|---|---|---|
| **Paint** | **Y** | **Z** | **WIE 313** |
| Natrosol | 87.89 | 97.26 | 72.04 |
| Octasol™ and Ammonia | 88.76 | 97.82 | 71.38 |
| Octasol™ and AMP95 | 88.02 | 97.53 | 72.63 |
| Calibration tile | 97.76 | 113.62 | 98.01 |

All paints show a close match in their whiteness index (WIE 313) after drying for one week. The closer the WIE value is to the calibration standard, the better the whiteness.

***Freeze Thaw Stability***

A 312 g sample of paint was weighed out to give an adequate volume. The test was then carried out according to ISO/DIS 1147. One cycle consists of 16 hours at -22°C followed by 7 hours at 23°C. After each cycle, the paint is reformed through mixing by hand and the viscosity taken using a Brookfield viscometer. If the paint can still be reformed after three cycles, it is said to be freeze thaw stable. The Brookfield viscosity data is given in Table 10.

Table 10.

| Brookfield Viscosity Measurement for Freeze Thaw Experiments | | | | | | |
|---|---|---|---|---|---|---|
| **Speed (rpm)** | **Initial Viscosity (cP)** | | | **Viscosity after 1 cycle (cP)** | | |
| | **Natrosol** | **Octasol™ and Ammonia** | **Octasol™ and AMP95** | **Natrosol** | **Octasol™ and Ammonia** | **Octasol™ and AMP95** |
| 0.5 | 19200 | 44800 | 40800 | 106400 | 31200 | 16400 |
| 1 | 14400 | 28400 | 27200 | 77200 | 8000 | 12400 |
| 2 | 10800 | 20200 | 14800 | 58000 | 5200 | 9200 |
| 4 | 7800 | 13400 | 8100 | 39300 | 3300 | 6500 |
| 5 | 6880 | 12320 | 6560 | 34560 | 3040 | 5520 |
| 10 | 4800 | 8000 | 3840 | 22360 | 1980 | 3760 |
| 20 | 3340 | 5120 | 2200 | 14640 | 1340 | 2610 |
| 50 | 2016 | 2682 | 936 | Off scale | 800 | 1608 |
| 100 | 1372 | 1544 | 544 | Off scale | 524 | 1208 |

The viscosity measurements were performed on a Brookfield viscometer using spindle size 5. All the paints had separated out to a solid and a liquid layer. These layers did not mix back together showing irreversible coagulation in the paint. The Natrosol-containing paint when mixed gave one large lump of coagulated paint, whilst the paints containing colloidal cationic alumina gave smaller coagulated particles. This difference in breakdown is also shown in the viscosity measurements taken after thawing, with the coagulated Natrosol-containing paint having a much higher viscosity.

***Scatter Coefficient***

Paint films were cast onto 75 μm thick polyester film using Kbars to give nominal wet film thicknesses of 24, 36, 50, 75 and 100 μm. The reflectance of the paint films over a black tile was measured using white spirit to ensure good contact. The Y value was measured on a Spectrogard spectrophotometer, using D65 as the illuminant, 10° observer. and large sample port and with no specular component included. To calculate the film thickness, the dry density (BS3900: Part A10: 1985), mass and area of each paint film was measured. The area was determined by using a Leica Quantimet 520 Image Analyser. The following equation was used to calculate the scatter coefficient:

$$S_i \cdot x_i = \frac{R_\infty}{1 - R_\infty^2} \cdot \ln\left[\frac{R_\infty \cdot (1 - R_i \cdot R_\infty)}{R_\infty - R_i}\right]$$

Where:

$S_i$ is the scatter coefficient,
$X_i$ is the calculated film thickness,
$R_\infty$ is the reflectance from a film of infinite thickness,
$R_i$ is the measured reflectance.

A value of $R_\infty$ that minimises the variance of $S_i$ is used to calculate the scatter coefficient, which is reported as a mean value of $S_i$ taken over all film thicknesses.

The results for scatter coefficient are given in Table 11.

Table 11.

| Scatter coefficient Results for Paint Systems | | | |
|---|---|---|---|
| | **Natrosol and Ammonia** | **Octasol™ and Ammonia** | **Octasol™ and AMP95** |
| Mean scatter coefficient | 281.78 | 294.03 | 265.92 |
| Standard Deviation | 19.25 | 32.69 | 59.85 |

A large scatter coefficient shows that the paint is able to scatter light effectively. The results show that there is no appreciable difference between the paints in their scatter values.

***Density***

The density of the paints was calculated using the method of BS3900: Part A 10: 1985. The results are given in Table 12.

Table 12.

| Density of Paint Systems | | | |
|---|---|---|---|
| | **Natrosol and Ammonia** | **Octasol™ and Ammonia** | **Octasol™ and AMP95** |
| Density (g $cm^{-3}$) | 2.38 | 2.40 | 2.44 |

The paints all have similar dry density values. The density of the paint containing AMP95 is slightly higher because the AMP95 was not included in the total solids content of the paint formulation.

All publications mentioned in the above specification are herein incorporated by reference. Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in chemistry or related fields are intended to be within the scope of the following claims.

**Claims**

1. A binder and/or thickener system comprising alumina.

2. A binder and/or thickener system according to claim 1 wherein the alumina is cationic.

3. A binder and/or thickener system according to claim 1 or 2 wherein the alumina is colloidal.

4. A binder and/or thickener system according to claim 1, 2 or 3 wherein the alumina is fibrous.

5. A binder and/or thickener system according to claim 1, 2 ,3 or 4 wherein the alumina is boehmite alumina.

6. Use of an alumina as defined in any one of the preceding claims for improving the binding properties and/or thickening a surface coating.

7. A surface coating comrpising an alumina as defined in any one of the claims 1 to 5.

8. A binder and/or thickener system as substantially herein before described with reference to any one of the Examples.

9. A use as substantially herein before described with reference to any one of the Examples.

10. A surface coating as substantially herein before described with reference to any one of the Examples.

Figure 1. Comparison of Brookfield Viscosity of Colloidal Alumina-Water Mixtures at pH 3.5 versus Natrosol-Water Mixture at pH 9

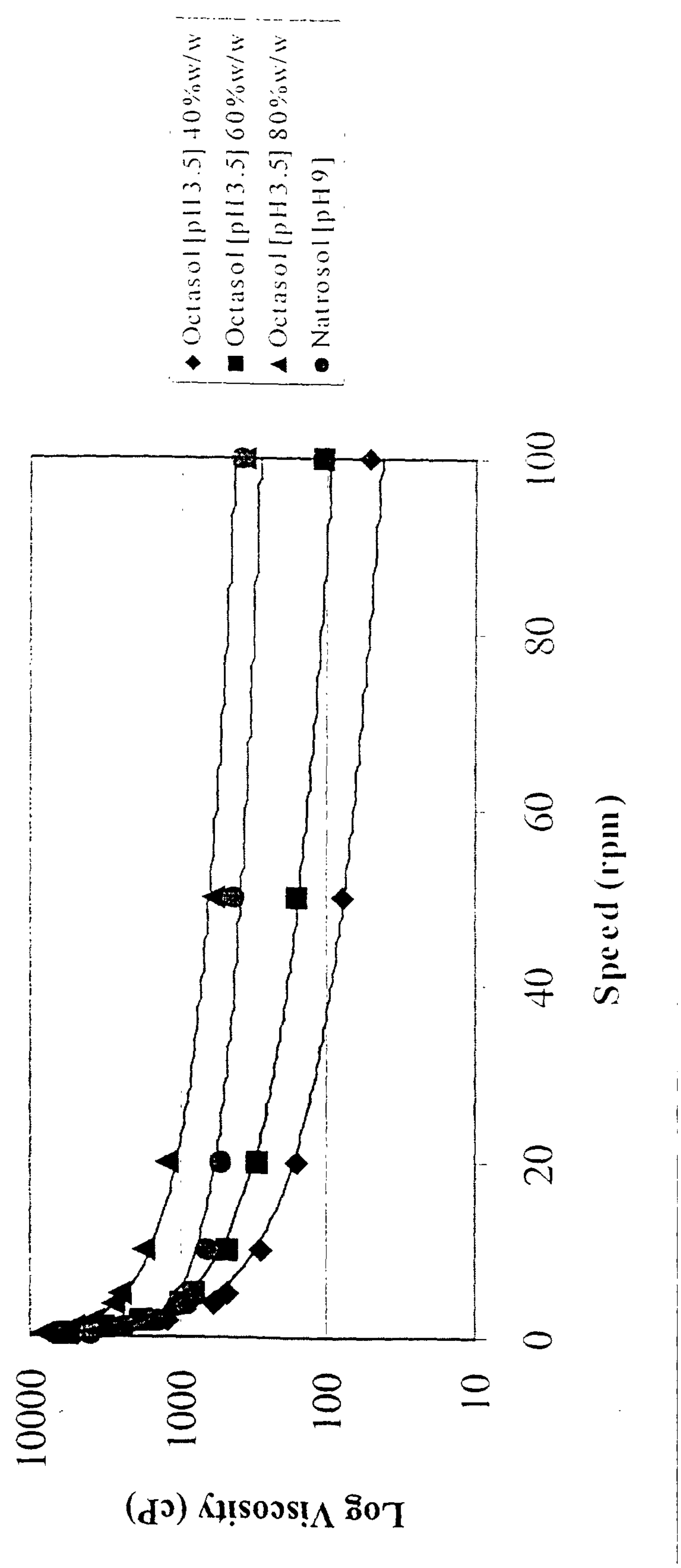

**Figure 2. Comparison of Brookfield Viscosity of Colloidal Alumina-Water Mixtures versus Natrosol-Water Mixture at pH 9**

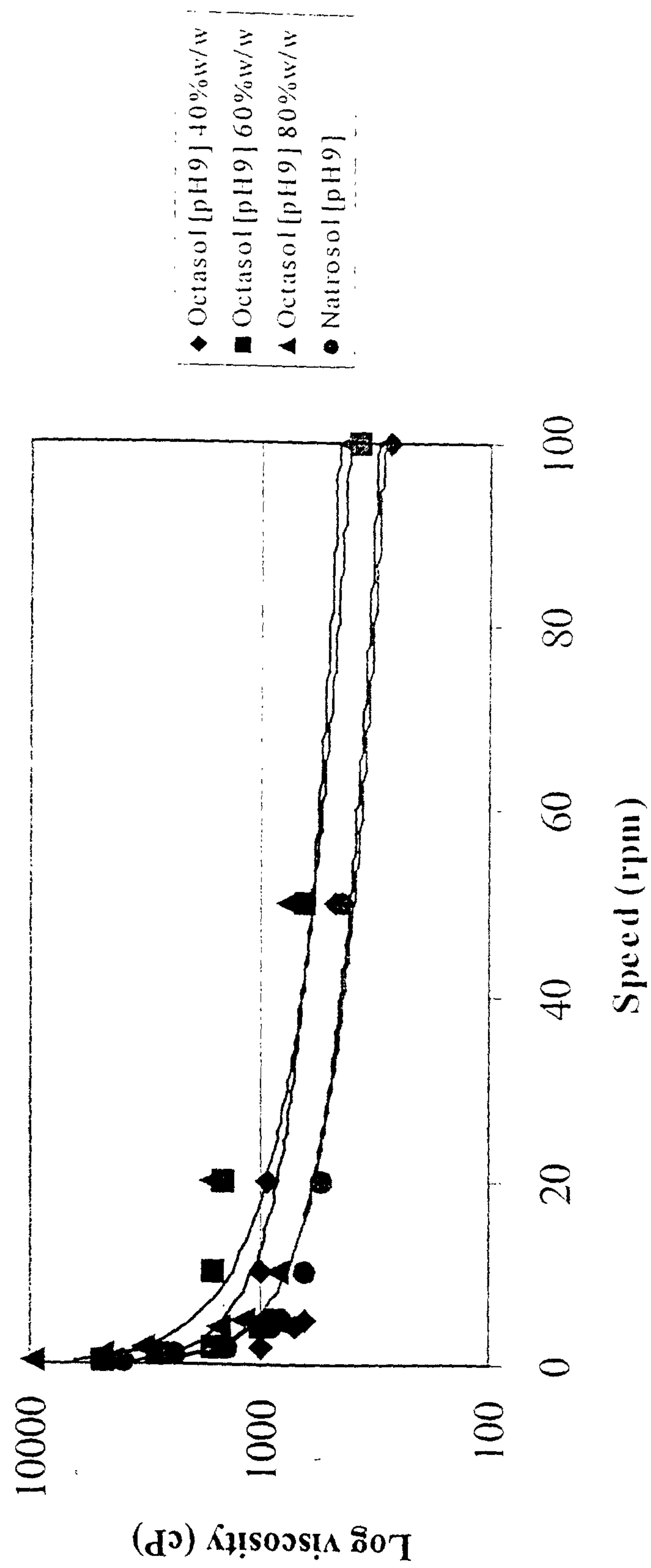

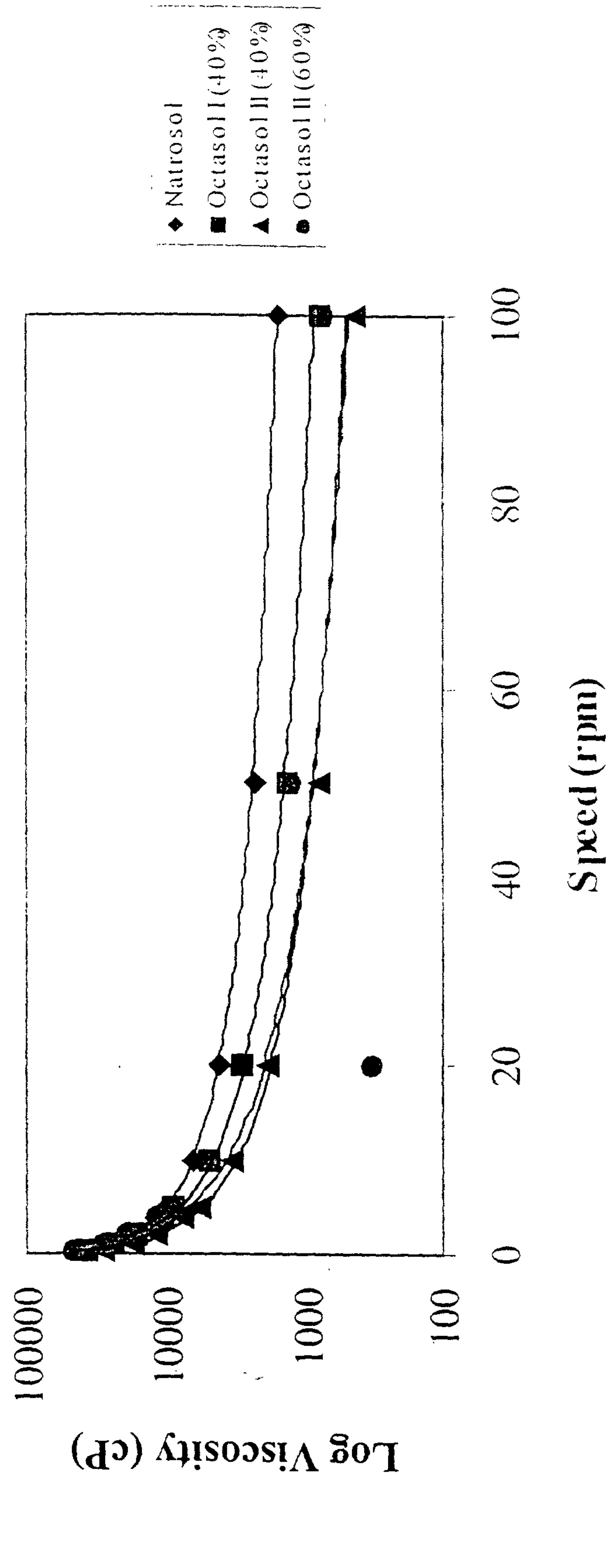


Figure 3. Brookfield Viscosity Measurements for Water-Based Matt Emulsion Paint Containing Colloidal Cationic Alumina

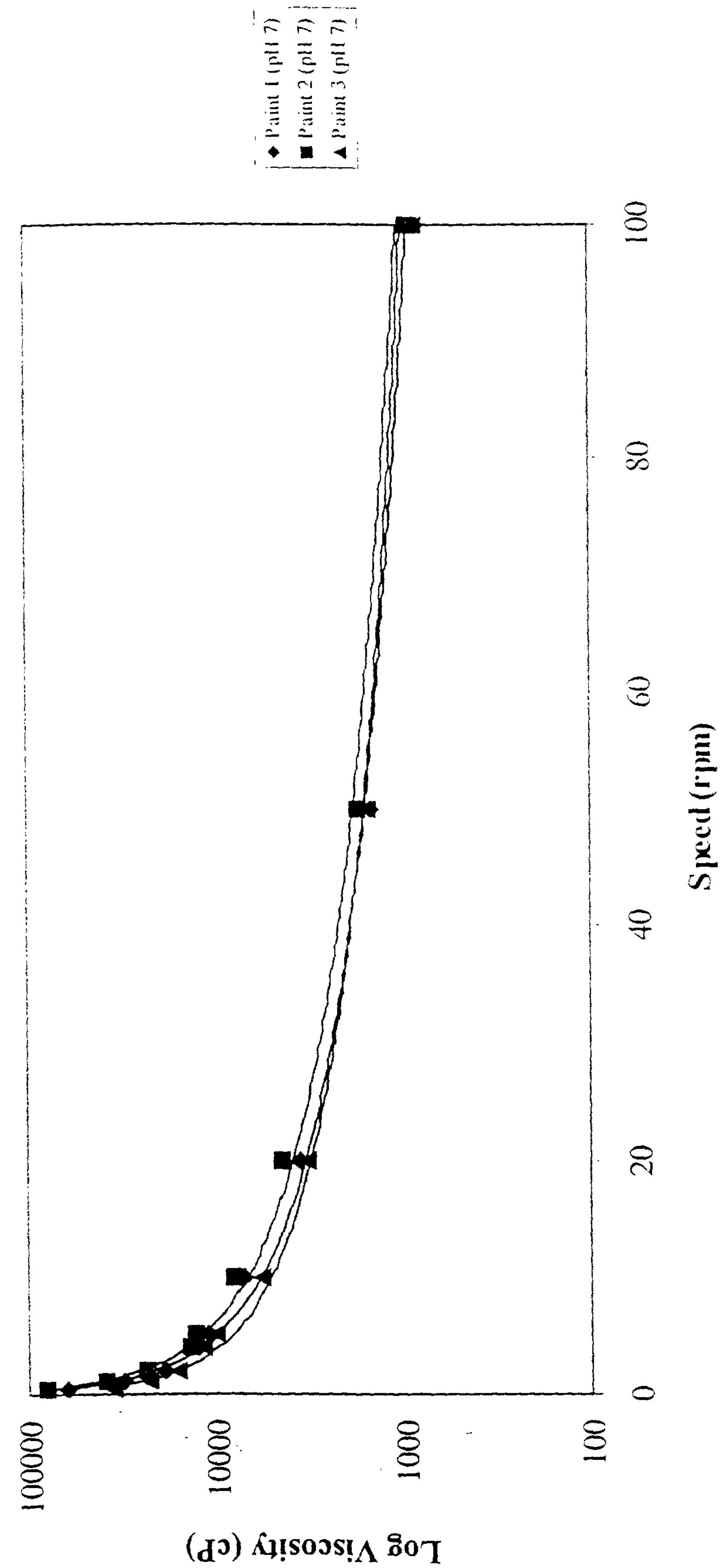


Figure 4. Brookfield Viscosity for 'Order of Addition ' Paints (pH 7)

Figure 5. Brookfield Viscosity for 'Order of Addition' Paints (pH 9)

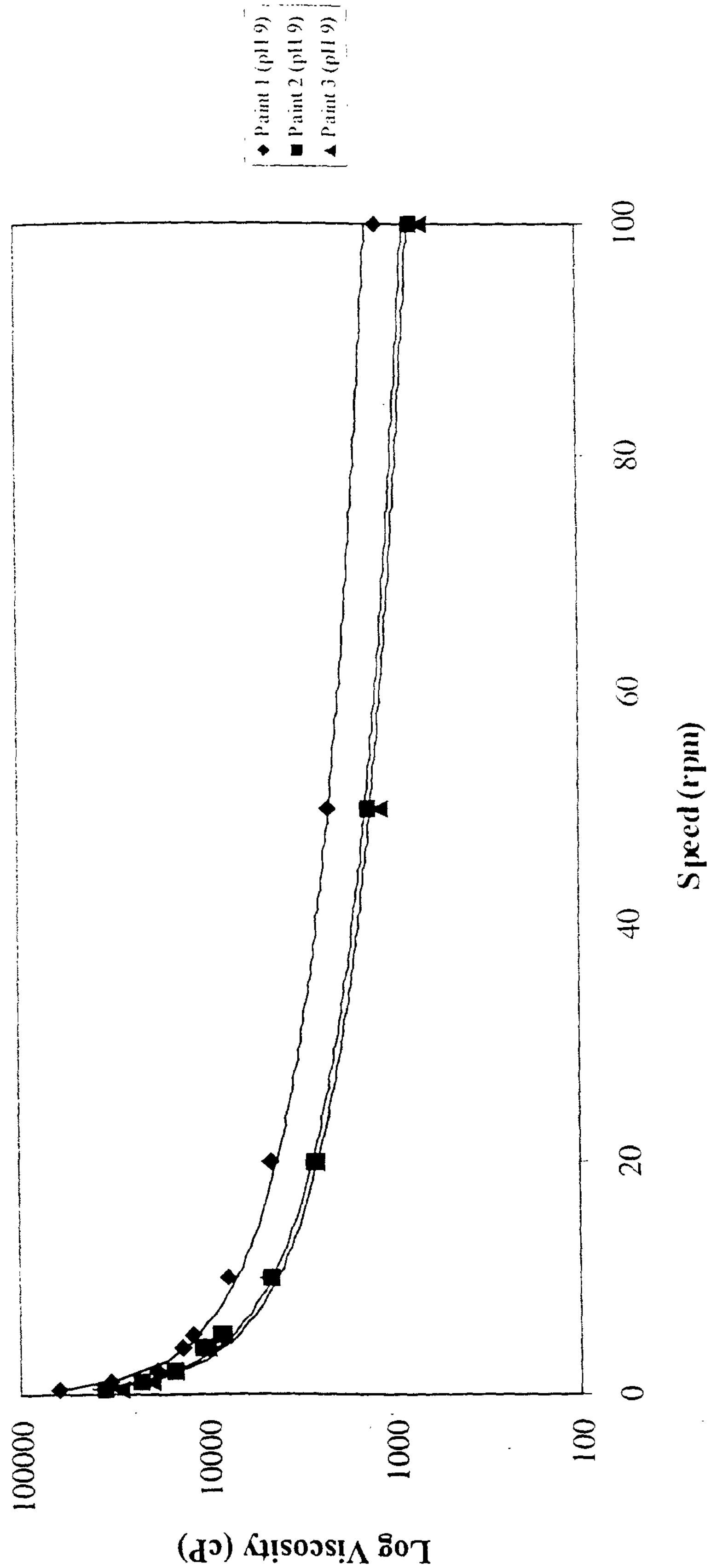

European Patent Office

# EUROPEAN SEARCH REPORT

Application Number
EP 01 30 4036

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 95 11270 A (VISTA CHEMICAL)<br>27 April 1995 (1995-04-27)<br>* page 4, line 28-32 *<br>* page 5, line 4-8 *<br>* examples 2-4 *<br>--- | 1-7 | C09D7/00 |
| X | US 3 386 934 A (AGUADISCH LEON ET AL)<br>4 June 1968 (1968-06-04)<br>* column 1, line 14-29 *<br>* column 2, line 30-40 *<br>----- | 1 | |

TECHNICAL FIELDS SEARCHED (Int.Cl.7)

C09D

The present search report has been drawn up for all claims

| Place of search | Date of completion of the search | Examiner |
|---|---|---|
| THE HAGUE | 2 August 2001 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 30 4036

This annex lists the patent family membersrelating to the patent documents cited in the above-mentioned European search report.
The members are as contained in the European Patent Office EDP file on
The European Patent Office is in no way liable for these particulars which are merely given for the purpose of information.

02-08-2001

| Patent document cited in search report | Publication date | Patent family member(s) | Publication date |
|---|---|---|---|
| WO 9511270 A | 27-04-1995 | CA 2174629 A | 27-04-1995 |
| | | EP 0728157 A | 28-08-1996 |
| | | JP 9511258 T | 11-11-1997 |
| | | US 5550180 A | 27-08-1996 |
| US 3386934 A | 04-06-1968 | BE 665390 A | 14-12-1965 |
| | | DE 1519295 A | 17-09-1970 |
| | | FR 1407140 A | 24-11-1965 |
| | | GB 1088923 A | 25-10-1967 |
| | | NL 6507611 A | 16-12-1965 |
| | | SE 318046 B | 01-12-1969 |

EPO FORM P0459

For more details about this annex : see Official Journal of the European Patent Office, No. 12/82